(19) Europäisches Patentamt
European Patent Office
Office européen des brevets

(11) **EP 3 837 568 B1**

(12) **FASCICULE DE BREVET EUROPÉEN**

(45) Date de publication et mention
de la délivrance du brevet:
**31.08.2022 Bulletin 2022/35**

(21) Numéro de dépôt: **19752219.6**

(22) Date de dépôt: **01.07.2019**

(51) Classification Internationale des Brevets (IPC):
**G01S 7/292** (2006.01)   **G01S 7/35** (2006.01)
**G01S 7/487** (2006.01)   **G01S 7/493** (2006.01)

(52) Classification Coopérative des Brevets (CPC):
**G01S 7/2925; G01S 7/354; G01S 7/487;
G01S 7/493**

(86) Numéro de dépôt international:
**PCT/FR2019/051619**

(87) Numéro de publication internationale:
**WO 2020/035638 (20.02.2020 Gazette 2020/08)**

(54) **PROCÉDÉ DE DÉTERMINATION D'UN INDICE DE CONFIANCE ASSOCIÉ À UN OBJET DÉTECTÉ PAR UN CAPTEUR DANS L'ENVIRONNEMENT D'UN VÉHICULE AUTOMOBILE**

VERFAHREN ZUR BESTIMMUNG EINES KONFIDENZINDEXES IM ZUSAMMENHANG MIT EINEM OBJEKT, DAS VON EINEM SENSOR IN DER UMGEBUNG EINES KRAFTFAHRZEUGS ERKANNT WURDE

METHOD FOR DETERMINING A CONFIDENCE INDEX ASSOCIATED WITH AN OBJECT DETECTED BY A SENSOR IN THE ENVIRONMENT OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.08.2018 FR 1857503**

(43) Date de publication de la demande:
**23.06.2021 Bulletin 2021/25**

(73) Titulaire: **PSA Automobiles SA
78300 Poissy (FR)**

(72) Inventeurs:
• **VANPOPERINGHE, Elodie
92100 BOULOGNE BILLANCOURT (FR)**
• **CHAMBRIN, Loic
78960 VOISINS LE BRETONNEUX (FR)**
• **LAYERLE, Jean-francois
94320 THIAIS (FR)**
• **HENDI, Paul
92400 COURBEVOIE (FR)**

(56) Documents cités:
**US-A1- 2014 159 948     US-A1- 2018 095 171
US-A1- 2018 106 885**

**Description**

Domaine de l'invention

La présente invention concerne le domaine de la détection d'objets dans l'environnement d'un véhicule automobile. Elle vise en particulier un procédé de détermination d'un indice de confiance associé à un objet détecté par un capteur dans l'environnement d'un tel véhicule automobile.

Arrière-plan de l'invention

Les véhicules automobiles ont tendance à être de plus en plus équipés de systèmes d'aides à la conduite sophistiqués, communément désignés sous l'acronyme anglophone ADAS pour « Advanced Driver Assistant Systems », et ayant pour objectif d'améliorer le confort de conduite et/ou la sécurité des passagers.

Ces systèmes d'aides à la conduite mettent en œuvre des dispositifs de détection aptes à détecter différents objets situés dans leur environnement et à prédire leur déplacement lorsque ces derniers sont mobiles.

Les prédictions peuvent être utilisées par exemple pour déterminer la trajectoire du véhicule et/ou pour afficher des messages d'alerte audio et/ou vidéo à destination du conducteur.

Chaque dispositif de détection comprend au moins un capteur (caméra, radar, lidar, capteur laser, capteur à ultrasons, etc....) implanté à l'avant, à l'arrière ou sur un côté du véhicule dans une zone d'observation donnée, ainsi qu'un module de traitement associé à ce capteur et apte à délivrer certaines informations sur le ou les objets détectés en fonction des grandeurs de mesure reçues par le ou les capteurs.

Les capteurs de type radar et lidar, utilisés notamment en application à détection lointaine par les régulateurs de vitesse adaptatifs (mieux connus sous l'acronyme anglais ACC pour « Adaptive Cruise Control » ou « Autonomous Cruise Control »), fournissent directement une information de position et parfois de vitesse des objets présents dans la scène.

Cette information permet de segmenter les différents objets présents et de leur attribuer des informations utiles comme leur position en coordonnées cartésiennes ou polaires par rapport au véhicule (ou par rapport à un repère fixe si la position du véhicule est bien déterminée dans ce repère) sur une représentation en deux dimensions, et éventuellement leur vitesse.

Malheureusement, la qualité de détection des capteurs n'est pas uniforme dans l'ensemble de leur cône de visibilité, de sorte que ces derniers peuvent parfois détecter des objets inexistants dans l'environnement du véhicule ce qui peut conduire à l'établissement de prédictions erronées.

Afin de limiter au maximum les erreurs de détection, les systèmes d'aides à la conduite associent chaque objet détecté à un indice de confiance et ne prennent en compte cet objet que lorsque cet indice est supérieur ou égal à un pourcentage seuil. US 2018/095171 A1 par exemple divulgue un procédé de détermination d'un indice de confiance associé à un objet détecté par un capteur dans l'environnement d'un véhicule automobile.

Actuellement, l'indice de confiance est principalement déterminé selon une fonction décroissante de la distance entre le capteur et l'objet identifié (autrement dit, plus cette distance sera grande, plus l'indice de confiance sera faible).

Malheureusement, cette méthode de calcul ne permet pas de traduire de manière suffisamment réaliste la variation de la qualité de détection du capteur dans son cône de visibilité, de sorte que les systèmes d'aides à la conduite sont contraints, afin d'éviter la non prise en compte de nombreux objets pourtant bien réels, d'opter pour un pourcentage seuil faible entrainant à l'inverse la prise en compte d'objets non existants.

Objet et résumé de l'invention

La présente invention vise donc à déterminer un indice de confiance plus représentatif de la réalité de détection du capteur.

Elle propose à cet effet un procédé de détermination d'un indice de confiance associé à un objet détecté par un capteur dans l'environnement d'un véhicule automobile, caractérisé en ce qu'il comprend les étapes suivantes :

- approximation de la zone de détection dudit capteur par un polygone dont deux des côtés sont définis par les bordures latérales délimitant le secteur angulaire de détection de ce capteur ;
- détermination du centre de gravité dudit polygone ;
- division dudit polygone en une pluralité de sous-zones triangulaires de détection définies chacune par deux sommets adjacents de ce polygone et ledit centre de gravité ;
- identification, lorsque ledit capteur détecte un objet, de la sous-zone triangulaire dans laquelle cet objet se trouve ;
- détermination de l'équation de la droite passant par ledit objet et étant parallèle à la bordure extérieure de la sous-zone triangulaire à laquelle appartient ce même objet ; et

- calcul d'un indice de confiance associé audit objet suivant une fonction décroissante du rapport homothétique selon ledit centre de gravité entre ladite droite et celle définie par la bordure extérieure de la sous-zone triangulaire à laquelle appartient ledit objet.

Le procédé selon l'invention permet de déterminer un indice de confiance associé à un objet détecté par un capteur et traduisant avec une grande précision la variation de la qualité de détection de ce capteur dans sa zone de visibilité, de sorte à permettre à d'améliorer très sensiblement la perception de l'environnement du véhicule par les systèmes d'aides à la conduite implantés dans ce véhicule et utilisant les données transmises par ce capteur.

Selon des caractéristiques préférées du procédé selon l'invention, prises seules ou en combinaison :

- ledit polygone présente un axe de symétrie confondu avec l'axe de détection médian dudit capteur ;
- ledit polygone est un triangle ;
- ledit polygone est un losange ;
- ladite étape d'identification comprend une sous étape consistant à vérifier pour chacune des dites sous-zones triangulaires, le nombre d'intersections entre n'importe quelle demi-droite issue dudit objet et les trois bordures délimitant cette sous-zone, ledit objet étant contenu dans la sous-zone présentant une unique intersection avec une seule des bordures délimitant cette sous-zone ;
- l'équation de ladite droite passant par le dit objet est déterminée à partir des coordonnées dudit objet fournies par ledit capteur et de l'équation de la droite définie par ladite bordure extérieure ;
- ledit rapport homothétique est déterminé à partir des coordonnées de l'intersection entre ladite droite passant par ledit objet et l'une des bordures de la sous-zone contenant ledit objet ;
- ladite fonction décroissante est définie de sorte que l'indice de confiance soit égal à un lorsque le rapport homothétique est égal à zéro, et égal à zéro lorsque ce même rapport homothétique est égal à un ;
- ladite fonction décroissante est de type affine ; et/ou
- ladite fonction décroissante est de type polynomiale.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :

- la figure 1 est un diagramme fonctionnel d'un dispositif de détection destiné à être intégré dans un système avancé d'aide à la conduite ;
- la figure 2 représente un organigramme du procédé de détermination d'un indice de confiance associé à un objet détecté par un capteur du dispositif de détection ; et
- les figures 3 et 4 illustrent certaines étapes du procédé de la figure 2.

### Description détaillée

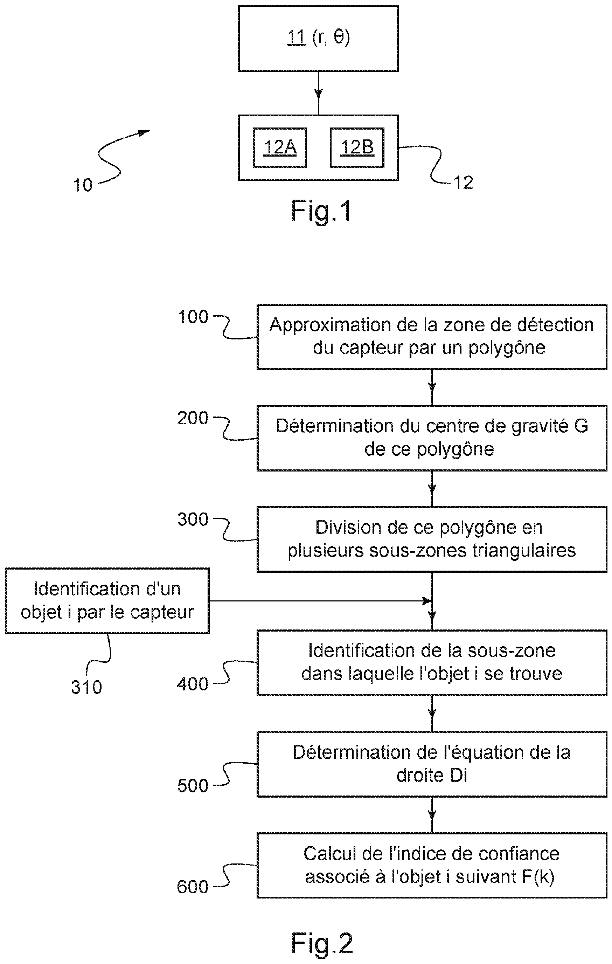

La figure 1 illustre un dispositif de détection 10 destiné à être intégré dans un système avancé d'aide à la conduite (ADAS) tel qu'un régulateur de vitesse adaptatif.

Le dispositif de détection 10 comporte au moins un capteur radar 11 positionné en partie avant du véhicule de sorte à détecter les objets situés dans son environnement avant, ainsi qu'un module de traitement 12 apte à déterminer un indice de confiance associé à chaque objet détecté par ce capteur.

Le capteur 11 est ici constitué par un radar Doppler à balayage et à longue portée émettant de façon périodique un faisceau signal sur un secteur angulaire θ d'environ 40°. Ce capteur radar 11 présente classiquement une portée r comprise entre 200 et 250 mètres, de sorte qu'il puisse détecter la présence d'objets suffisamment en amont du véhicule pour laisser un temps de réaction suffisant au conducteur.

De préférence, le capteur radar 11 fonctionne à une fréquence de 24 GHz car celle-ci est capable de passer à travers un grand nombre de matériaux plastiques sans causer d'interférences significatives. La majorité des pare-chocs avant des véhicules étant actuellement fabriqués dans ce matériau, l'utilisation de la fréquence 24 GHz permet de monter un tel capteur radar juste derrière le pare-choc de sorte que ce dernier soit invisible et protégé des agressions extérieures.

En variante, le type, la fréquence, le positionnement, la portée et/ou le secteur angulaire du capteur peuvent être différents.

Le capteur peut par exemple être constitué par une caméra, un lidar, un capteur laser, ou bien encore un capteur à ultrasons.

Le module de traitement détermine 12 comporte un calculateur 12A, un module de stockage 12B qui comprend de la mémoire non volatile de type EEPROM ou FLASH et de la mémoire vive.

La mémoire non volatile stocke un processus de détermination d'un indice de confiance associé à chaque objet détecté par le capteur 11 et dont l'organigramme est représenté sur la figure 2.

Selon un mode préféré de réalisation, l'ensemble des informations contenues dans cette mémoire non volatile peut être mis à jour par des moyens de communication ou des moyens de lecture d'un support de données.

On va maintenant décrire en détails et à l'appui de l'organigramme de la figure 2, les différentes étapes de ce processus.

Celui-ci est initié à l'étape 100 au cours de laquelle le module de traitement 12 approxime la zone de détection du capteur 11 par un polygone présentant un axe de symétrie confondu avec l'axe de détection médian de ce capteur 11 et dont deux des côtés sont définis par les deux bordures latérales délimitant le secteur angulaire de détection de ce capteur 11.

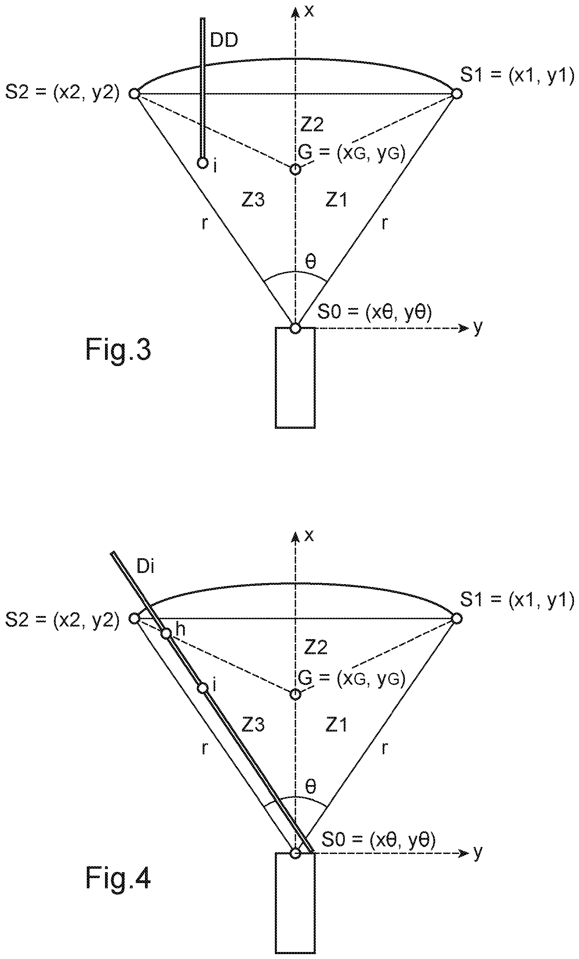

En l'espèce et comme illustré par la figure 3, ce polygone est constitué par un triangle $(S_0, S_1, S_2)$ défini par ses trois sommets $S_0$, $S_1$ et $S_2$, avec :

- le sommet $S_0$ qui correspond à la position du capteur 11, et
- les sommets $S_1$ et $S_2$ qui correspondent respectivement aux deux extrémités distales des bordures latérales délimitant le secteur angulaire de détection $\theta$.

Ainsi, l'arc de cercle de la zone de détection reliant ces deux extrémités distales $S_1$, $S_2$ des bordures latérales est approximé par un segment de droite $[S_2, S_3]$.

En variante et afin d'obtenir encore une meilleure approximation de la zone de détection, on pourrait par exemple prendre un losange (l'arc de cercle étant alors approximé par deux segments de droite agencés symétriquement par rapport à l'axe médian de détection).

La deuxième étape 200 de ce procédé consiste à déterminer le centre de gravité G de ce polygone à partir des coordonnées de ses sommets $(S_0, S_1, S_2)$ définies dans un espace affine plan muni d'un repère cartésien (x, y) centré sur le sommet $S_0$ (capteur 11), soit en l'espèce :

- pour le sommet $S_0$, $x_0 = 0$ et $y_0 = 0$ ;
- pour le sommet $S_1$, $x_1 = r\,\cos\frac{\theta}{2}$ et $y_1 = r\,\sin\frac{\theta}{2}$ ; et
- pour le sommet $S_2$, $x_2 = r\,\cos\frac{\theta}{2}$ et $y_2 = -r\,\sin\frac{\theta}{2}$ .

Les coordonnées $(x_G, y_G)$ centre de gravité G d'un polygone à n côtés peuvent être facilement déterminées à partir des formules générales suivantes :

$$x_G = \frac{1}{6A}\sum_{j=0}^{n-1}(x_j + x_{j+1})(x_j y_{j+1} - x_{j+1} y_j) \;;$$

et

$$y_G = \frac{1}{6A}\sum_{j=0}^{n-1}(y_j + y_{j+1})\left(x_j y_{j+1} - x_{j+1} y_j\right) \;;$$

avec

$$A = \frac{1}{2}\sum_{j=0}^{n-1}(x_j y_{j+1} - x_{j+1} y_j) \;.$$

Le processus divise ensuite (étape 300) le polygone en n sous-zones triangulaires de détection Zi définies chacune par deux sommets adjacents de ce polygone et par son centre de gravité G de détection.

En l'espèce et tel qu'illustré par la figure 3 le triangle $(S_0, S_1, S_2)$ est divisé en trois sous-zones triangulaires $Z_1$, $Z_2$ et $Z_3$ délimitées respectivement par les triangles $(S_0, S_1, G)$, $(S_1, S_2, G)$ et $(S_2, S_0, G)$.

Lorsque le capteur 11 détecte la présence d'un objet i dans sa zone de détection (événement 310), le processus identifie dans quelle sous-zone triangulaire Z cet objet se trouve (étape 400).

Pour ce faire, le processus vérifie, pour chacune de ces sous-zones triangulaires, le nombre d'intersections entre n'importe quelle demi-droite issue de cet objet i (par exemple la demi droite verticale DD illustrée sur la figure 3 et les trois bordures délimitant cette sous-zone.

En effet, mathématiquement, chaque demi-droite issue d'un point contenu dans une telle sous-zone triangulaire doit présenter une unique intersection avec une seule des bordures délimitant cette sous-zone.

Sur l'exemple de la figure 3 où l'objet i appartient à la sous-zone $Z_3$, on constate ainsi que la demi-droite DD présente bien une seule intersection avec la seule bordure [G, $S_2$] de cette sous-zone $Z_3$, tandis qu'elle présente deux intersections avec les bordures [G, $S_2$] et [$S_1$, $S_2$] de la sous-zone $Z_2$ et aucune intersection avec les bordures de la sous-zone $Z_1$.

Le processus détermine ensuite à l'étape 500 l'équation de la droite Di passant par cet objet i et étant parallèle à la bordure extérieure de la sous-zone triangulaire à laquelle appartient ce même objet (cette bordure extérieure correspondant à l'un des côtés du polygone P).

En l'espèce et comme illustré par la figure 4 la droite Di est donc définie comme celle étant parallèle à la bordure extérieure [$S_0$, $S_2$] de la sous-zone $Z_3$.

Son équation peut être déterminée aisément à partir des coordonnées de l'objet i fournies par le capteur 11 et de l'équation de la droite ($S_0$, $S_2$) que définie cette bordure extérieure [$S_0$, $S_2$].

A l'étape 600, le module de traitement 12 calcule enfin l'indice de confiance de l'objet i suivant une fonction décroissante F du rapport homothétique k selon le centre de gravité G entre cette droite Di et la droite ($S_0$, $S_2$) définie par la bordure extérieure [$S_0$, $S_2$].

Tel qu'illustré par la figure 4 et conformément au théorème de Thales :

$$k = \frac{Gh}{GS_2}$$

où h correspond à l'intersection entre la droite Di et la bordure [G, $S_2$] de la sous-zone $Z_3$ contenant l'objet i.

Le rapport k sera donc aisément déterminé à partir des coordonnées de ce point h déduites à partir des équations respectives de cette droite Di et de la droite (G $S_2$).

En variante, on pourrait également déterminer le rapport homothétique k à partir de l'intersection entre la droite Di et la bordure [G, $S_0$] de la sous-zone $Z_3$ contenant l'objet i.

Avantageusement de type affine ou polynomiale de deuxième ou troisième degré, la fonction décroissante F est définie de sorte que l'indice de confiance F(k) soit égal à un lorsque le rapport homothétique k est égal à zéro (soit F(0) = 1), et égal à zéro lorsque le rapport homothétique k est égal à un (soit F(1) = 0).

## Revendications

1. Procédé de détermination d'un indice de confiance associé à un objet (i) détecté par un capteur (11) dans l'environnement d'un véhicule automobile, **caractérisé en ce qu'**il comprend les étapes suivantes :

   - approximation de la zone de détection dudit capteur (11) par un polygone ($S_0$, $S_1$, $S_2$) dont deux des côtés sont définis par les bordures latérales délimitant le secteur angulaire de détection ($\theta$) de ce capteur ;
   - détermination du centre de gravité (G) dudit polygone ($S_0$, $S_1$, $S_2$) ;
   - division dudit polygone en une pluralité de sous-zones triangulaires de détection ($Z_1$, $Z_2$, $Z_3$) définies chacune par deux sommets adjacents de ce polygone ($S_0$, $S_1$, $S_2$) et ledit centre de gravité (G) ;
   - identification, lorsque ledit capteur (11) détecte un objet (i), de la sous-zone triangulaire dans laquelle cet objet (i) se trouve ;
   - détermination de l'équation de la droite (Di) passant par ledit objet (i) et étant parallèle à la bordure extérieure de la sous-zone triangulaire à laquelle appartient ce même objet (i) ; et
   - calcul d'un indice de confiance associé audit objet (i) suivant une fonction décroissante (F) du rapport homothétique (k) selon ledit centre de gravité (G) entre ladite droite (Di) et celle définie par la bordure extérieure de la sous-zone triangulaire à laquelle appartient ledit objet (i).

2. Procédé de détermination d'un indice de confiance selon la revendication 1, **caractérisé en ce que** ledit polygone présente un axe de symétrie confondu avec l'axe de détection médian dudit capteur (11).

3. Procédé de détermination d'un indice de confiance selon la revendication 2, **caractérisé en ce que** ledit polygone est un triangle.

4. Procédé de détermination d'un indice de confiance selon la revendication 2, **caractérisé en ce que** ledit polygone est un losange.

5. Procédé de détermination d'un indice de confiance selon l'une des revendications 1 à 4, **caractérisé en ce que** ladite étape d'identification comprend une sous étape consistant à vérifier pour chacune des dites sous-zones triangulaires ($Z_1$, $Z_2$, $Z_3$), le nombre d'intersections entre n'importe quelle demi-droite (DD) issue dudit objet (i) et les trois bordures délimitant cette sous-zone, ledit objet (i) étant contenu dans la sous-zone présentant une unique intersection avec une seule des bordures délimitant cette sous-zone.

6. Procédé de détermination d'un indice de confiance selon l'une des revendications 1 à 5, **caractérisé en ce que** l'équation de ladite droite (Di) passant par le dit objet (i) est déterminée à partir des coordonnées dudit objet (i) fournies par ledit capteur (11) et de l'équation de la droite définie par ladite bordure extérieure.

7. Procédé de détermination d'un indice de confiance selon l'une des revendications 1 à 6, **caractérisé en ce que** ledit rapport homothétique (k) est déterminé à partir des coordonnées de l'intersection (h) entre ladite droite (Di) passant par ledit objet (i) et l'une des bordures de la sous-zone contenant ledit objet (i).

8. Procédé de détermination d'un indice de confiance selon l'une des revendications 1 à 7, **caractérisé en ce que** ladite fonction décroissante (F) est définie de sorte que l'indice de confiance soit égal à un lorsque le rapport homothétique (k) est égal à zéro, et égal à zéro lorsque ce même rapport homothétique (k) est égal à un.

9. Procédé de détermination d'un indice de confiance selon l'une des revendications 1 à 8, **caractérisé en ce que** ladite fonction décroissante (F) est de type affine.

10. Procédé de détermination d'un indice de confiance selon l'une des revendications 1 à 8, **caractérisé en ce que** ladite fonction décroissante (F) est de type polynomiale.

**Patentansprüche**

1. Verfahren zur Bestimmung eines Vertrauensindexes, der mit einem Objekt (i) verbunden ist, das von einem Sensor (11) in der Umgebung eines Kraftfahrzeugs erfasst wird, **dadurch gekennzeichnet, dass** es die folgenden Schritte umfasst:

   - Annäherung des Erfassungsbereichs des Sensors (11) durch ein Polygon (S0, S1, S2), von dem zwei der Seiten durch die seitlichen Ränder definiert sind, die den Erfassungswinkelsektor ($\theta$) dieses Sensors begrenzen ;
   - Bestimmen des Schwerpunkts (G) des Polygons (S0, S1, S2) ;
   - Unterteilen des Polygons in eine Vielzahl von dreieckigen Erfassungsunterbereichen (Z1, Z2, Z3), die jeweils durch zwei benachbarte Eckpunkte dieses Polygons (S0, S1, S2) und den Schwerpunkt (G) definiert sind ;
   - Identifikation, wenn der Sensor (11) ein Objekt (i) erfasst, des dreieckigen Unterbereichs, in dem sich dieses Objekt (i) befindet;
   - Bestimmung der Gleichung der Geraden (Di), die durch das Objekt (i) verläuft und parallel zum äußeren Rand des dreieckigen Unterbereichs ist, zu dem das gleiche Objekt (i) gehört; und
   - Berechnung eines mit dem Objekt (i) verbundenen Vertrauensindexes gemäß einer abnehmenden Funktion (F) des homothetischen Verhältnisses (k) entlang des Schwerpunkts (G) zwischen der Geraden (Di) und derjenigen, die durch den äußeren Rand des dreieckigen Unterbereichs, zu dem das Objekt (i) gehört, definiert wird.

2. Verfahren zur Bestimmung eines Vertrauensindexes nach Anspruch 1, **dadurch gekennzeichnet, dass** das Polygon eine Symmetrieachse aufweist, die mit der mittleren Erfassungsachse des Sensors (11) zusammenfällt.

3. Verfahren zur Bestimmung eines Konfidenzindex nach Anspruch 2, **dadurch gekennzeichnet, dass** das Polygon ein Dreieck ist.

4. Verfahren zur Bestimmung eines Konfidenzindex nach Anspruch 2, **dadurch gekennzeichnet, dass** das Polygon eine Raute ist.

5. Verfahren zur Bestimmung eines Vertrauensindex nach einem der Ansprüche 1 bis 4, **dadurch gekennzeichnet, dass** der Identifikationsschritt einen Unterschritt umfasst, der darin besteht, für jede der dreieckigen Unterzonen (Z1, Z2, Z3) die Anzahl der Schnittpunkte zwischen einer beliebigen, von dem Objekt (i) ausgehenden Halbgeraden (DD) und den drei diese Unterzone begrenzenden Rändern zu überprüfen, wobei das Objekt (i) in der Unterzone enthalten ist, die einen einzigen Schnittpunkt mit einem einzigen der diese Unterzone begrenzenden Ränder aufweist.

6. Verfahren zur Bestimmung eines Vertrauensindex nach einem der Ansprüche 1 bis 5, **dadurch gekennzeichnet, dass** die Gleichung der Geraden (Di), die durch das Objekt (i) verläuft, ausgehend von den Koordinaten des Objekts (i), die von dem Sensor (11) geliefert werden, und der Gleichung der Geraden, die durch den äußeren Rand definiert wird, bestimmt wird.

7. Verfahren zur Bestimmung eines Vertrauensindex nach einem der Ansprüche 1 bis 6, **dadurch gekennzeichnet, dass** das homothetische Verhältnis (k) aus den Koordinaten des Schnittpunkts (h) zwischen der Geraden (Di), die durch das Objekt (i) verläuft, und einer der Kanten des Unterbereichs, der das Objekt (i) enthält, bestimmt wird.

8. Verfahren zur Bestimmung eines Vertrauensindex nach einem der Ansprüche 1 bis 7, **dadurch gekennzeichnet, dass** die abnehmende Funktion (F) so definiert ist, dass der Vertrauensindex gleich eins ist, wenn das homothetische Verhältnis (k) gleich null ist, und gleich null ist, wenn das gleiche homothetische Verhältnis (k) gleich eins ist.

9. Verfahren zur Bestimmung eines Konfidenzindex nach einem der Ansprüche 1 bis 8, **dadurch gekennzeichnet, dass** die abnehmende Funktion (F) vom affinen Typ ist.

10. Verfahren zur Bestimmung eines Konfidenzindex nach einem der Ansprüche 1 bis 8, **dadurch gekennzeichnet, dass** die abnehmende Funktion (F) vom Polynomialtyp ist.

**Claims**

1. Method for determining a confidence index associated with an object (i) detected by a sensor (11) in the environment of a motor vehicle, **characterised in that** it comprises the following steps:

   - approximation of the detection zone of the said sensor (11) by a polygon (S0, S1, S2), two of the sides of which are defined by the lateral edges delimiting the angular detection sector ($\theta$) of this sensor;
   - determination of the centre of gravity (G) of said polygon (S0, S1, S2);
   - division of said polygon into a plurality of triangular detection sub-zones (Z1, Z2, Z3) each defined by two adjacent vertices of this polygon (S0, S1, S2) and said centre of gravity (G);
   - identification, when said sensor (11) detects an object (i), of the triangular sub-zone in which this object (i) is located;
   - determining the equation of the line (Di) passing through said object (i) and being parallel to the outer edge of the triangular sub-area to which said object (i) belongs; and
   - calculating a confidence index associated with said object (i) according to a decreasing function (F) of the homothetic ratio (k) according to said centre of gravity (G) between said straight line (Di) and that defined by the outer edge of the triangular sub-area to which said object (i) belongs.

2. Method of determining a confidence index according to claim 1, **characterised in that** said polygon has an axis of symmetry coinciding with the median detection axis of said sensor (11).

3. Method of determining a confidence index according to claim 2, **characterised in that** said polygon is a triangle.

4. Method of determining a confidence index according to claim 2, **characterised in that** said polygon is a rhombus.

5. Method of determining a confidence index according to one of claims 1 to 4, **characterised in that** the said identification step comprises a sub-step consisting of verifying, for each of the said triangular sub-zones (Z1, Z2, Z3), the number of intersections between any half-line (DD) issuing from the said object (i) and the three edges delimiting this sub-zone, the said object (i) being contained in the sub-zone having a single intersection with only one of the edges delimiting this sub-zone.

6. Method of determining a confidence index according to one of claims 1 to 5, **characterised in that** the equation of said straight line (Di) passing through said object (i) is determined from the coordinates of said object (i) provided by said sensor (11) and from the equation of the straight line defined by said outer edge.

7. Method of determining a confidence index according to one of claims 1 to 6, **characterised in that** said homothetic ratio (k) is determined from the coordinates of the intersection (h) between said straight line (Di) passing through said object (i) and one of the edges of the sub-area containing said object (i).

8. Method of determining a confidence index according to one of claims 1 to 7, **characterised in that** the said decreasing function (F) is defined so that the confidence index is equal to one when the homothetic ratio (k) is equal to zero, and equal to zero when this same homothetic ratio (k) is equal to one.

9. A method of determining a confidence index according to any of claims 1 to 8, **characterised in that** said decreasing function (F) is of the affine type.

10. A method of determining a confidence index according to one of claims 1 to 8, **characterised in that** said decreasing function (F) is of polynomial type.

**Fig.1**

100 — Approximation de la zone de détection du capteur par un polygône

200 — Détermination du centre de gravité G de ce polygône

300 — Division de ce polygône en plusieurs sous-zones triangulaires

Identification d'un objet i par le capteur

310

400 — Identification de la sous-zone dans laquelle l'objet i se trouve

500 — Détermination de l'équation de la droite Di

600 — Calcul de l'indice de confiance associé à l'objet i suivant F(k)

**Fig.2**

Fig.3

Fig.4

**EP 3 837 568 B1**

## RÉFÉRENCES CITÉES DANS LA DESCRIPTION

**Documents brevets cités dans la description**

- US 2018095171 A1